# EUROPÄISCHE PATENTSCHRIFT

(11) **EP 2 285 510 B1**
(45) Veröffentlichungstag und Bekanntmachung des Hinweises auf die Patenterteilung: **07.09.2011**
(21) Anmeldenummer: 09741771.1
(22) Anmeldetag: 22.01.2009
(51) Int. Cl.: B21D 43/05

(54) **PRESSE MIT EINER TRANSFEREINRICHTUNG ZUM SCHRITTWEISEN VERSCHIEBEN DER WERKSTÜCKE UND MIT EINER GREIFERSCHIENENKUPPLUNG**
PRESS WITH A TRANSFER DEVICE FOR THE STEPWISE DISPLACEMENT OF THE WORKPIECES AND WITH A gripper rail COUPLING device
PRESSE COMPRENANT UN DISPOSITIF DE TRANSFERT POUR avancer LES PIÈCES PAS À PAS ET avec UN dispositif d' ACCOUPLEMENT des barres de préhension

(30) Priorität: 09.05.2008 DE 102008022994
(43) Veröffentlichungstag der Anmeldung: 23.02.2011
(73) Patentinhaber: Erdrich Beteiligungs GmbH, 77871 Renchen-Ulm (DE)
(72) Erfinder: ZEIBIG, Uwe, 77855 Achern (DE); NOCK, Klemens, 77704 Oberkirch-Zusenhofen (DE)
(74) Vertreter: Maucher, Wolfgang
(86) Internationale Anmeldenummer: PCT/EP2009/000364
(87) Internationale Veröffentlichungsnummer: WO 2009/135552

(56) Entgegenhaltungen:
- EP-A- 0 616 859
- EP-A- 1 862 237
- DE-A1- 3 300 227
- DE-A1- 4 234 997

## Beschreibung

Die Erfindung betrifft eine Presse zum Herstellen und Formen von in mehreren Schritten ihre entgültige Form erlangenden Werkstücken, mit einer Transfereinrichtung zum schrittweisen Verschieben der Werkstücke zu einzelnen Umformstellen der Presse, wobei diese Transfereinrichtung wenigstens eine oder zwei in Vorschubrichtung für die Vorschub- und Rücklaufbewegung hin- und her bewegbare, Greiferteile oder Greiferbereiche zum Erfassen der Werkstücke aufweisende Greiferschienen hat, die zum Erfassen der Werkstücke und zum Bewegen in Vorschubrichtung und anschließend wieder in Ausgangsstellung verstellbar sind, die Transfereinrichtung wenigstens eine Greiferschienenkupplung mit einem Kupplungsstück und einem mit der Greiferschiene fest verbundenen, zu dem Kupplungsstück passend ausgebildeten Kupplungsgegenstück aufweist, das Kupplungsstück zum Werkzeugwechsel von dem Kupplungsgegenstück trennbar und mit diesem verbindbar ist und das Kupplungsstück einen Arretierungsmechanismus hat.

Für den Werkzeugwechsel an Pressen, insbesondere bei Transferpressen, ist es bekannt, die Greiferschiene vollständig oder zumindest im Bereich der an ihnen befindlichen Werkstückhalter zu lösen, so dass entweder ein Greiferschienenstück zusammen mit seinem Antrieb oder der Antrieb ohne Greiferschiene von diesem weg bewegt und die Greiferschiene entkoppelt und dann ausgewechselt werden kann.

Eine derartige Anordnung ist aus der DE 42 34 997 A1 bekannt, wobei die gegenseitige Kopplung eines Stückes einer Greiferschiene mit einem Reststück über einen schwenkbaren Haken erfolgt, der im Bereich eines zu erfassenden Bolzens mittels eines Kolbenantriebs in Gebrauchsstellung gebracht werden muss. In dieser Anordnung sind also besondere Steuerungen und Antriebe für die Betätigung dieser Kupplung, beispielsweise ein elektrischer Antrieb oder ein Hydraulikantrieb, mit entsprechendem Eigengewicht erforderlich. Hinzu kommt die Notwendigkeit von Hydraulikleitungen und/oder Kabeln für elektrische Betätigungen, die bei jedem Arbeitszug der Greiferschienen mitbewegt werden müssen.

Es besteht deshalb die Aufgabe, eine Presse mit einer Greiferschienenkupplung der eingangs genannten Art zu schaffen, wobei die Greiferschienenkupplung ohne Fremdenergie und ohne spezielle Antriebsmittel betätigt werden können soll.

Zur Lösung dieser Aufgabe ist vorgesehen, dass der Arretierungsmechanismus eine Zugstange aufweist, die im Wesentlichen parallel zur Verbindungsrichtung der Greiferschienenkupplung ausgerichtet ist und durch ein erstes Betätigungselement zwischen einer Halteposition und einer Löseposition der Greiferschienenkupplung verschiebbar ist, dass die Zugstange in der Halteposition wenigstens ein Arretierungselement quer zur Verbindungsrichtung der Greiferschienenkupplung und radial nach außen in eine Ausnehmung des Kupplungsgegenstücks drückt, dass das erste Betätigungselement von außen mechanisch betätigbar ist und dass durch das erste Betätigungselement eine quer zur Verbindungsrichtung der Greiferschienenkupplung gerichtete Betätigung in die Verschiebung der Zugstange umsetzbar ist. Durch die in eine Ausnehmung des Kupplungsgegenstücks gedrückten Arretierungselemente wird ein Formschluss zwischen dem Kupplungsstück und dem Kupplungsgegenstück hergestellt, der eine spielfreie Verbindung der Greiferschienenkupplung ermöglicht.

Die Erfindung hat den Vorteil, dass durch zwei Bewegungen, die in voneinander verschiedenen Richtungen verlaufen, unterschiedliche Arbeitsvorgänge ausführbar sind. Zum einen kann, wenn die Zugstange des Arretierungsmechanismus in ihrer Löseposition ist, durch eine Relativbewegung des Kupplungsgegenstücks gegen das Kupplungsstück in Verbindungsrichtung der Greiferschienenkupplung die Kupplung getrennt beziehungsweise verbunden werden. Die Verbindungsrichtung der Greiferschienenkupplung stellt somit die Arbeitsrichtung der Greiferschienenkupplung dar. Zum anderen kann durch eine Bewegung quer zur Verbindungsrichtung der zwei verschiedenen Kupplungen, also transversal oder vorzugsweise senkrecht zu dieser Richtung, eine Betätigung des Betätigungselements erfolgen und somit die Zugstange aus ihrer Halteposition in ihre Löseposition überführt werden, wodurch der Arretierungsmechanismus letztendlich die Greiferschienenkupplung freigibt. Diese unterschiedlichen Bewegungen der Greiferschienenkupplung sind bereits durch die Transfereinrichtung und die diese antreibenden Antriebsmittel ausführbar, weshalb separate Antriebsmittel für die Verriegelung und Entriegelung des Arretierungsmechanismus verzichtbar sind.

Um einen völligen Verzicht auf elektrische oder hydraulische Zuleitungen zu erreichen, ist der Arretierungsmechanismus vorzugsweise als mechanisch wirkende Vorrichtung ausgebildet. Die Zugstange weist hierbei geeignet ausgeformte Flächen auf, über die das oder die Arretierungselemente mit einer Andrückkraft beaufschlagbar sind. Die Ausrichtung der Zugstange im Wesentlichen parallel zur Verbindungsrichtung bewirkt ein besonders kleines Baumaß der Greiferschienenkupplung quer zu dieser Verbindungsrichtung. Hierdurch ist der Materialeinsatz zur Ausbildung des Kupplungsstücks und des Kupplungsgegenstücks besonders gering, wodurch die mit der Transfereinrichtung mitbewegte Masse möglichst gering ist. Vorzugsweise beträgt die Abweichung der Ausrichtung der Zugstange von der Verbindungsrichtung weniger als 5 Grad.

Besonders günstig ist es, wenn zur Betätigung des ersten Betätigungselements eine Bewegung der Greiferschiene mit ihrer Greiferschienenkupplung relativ zu einer Auflagekonsole oder einem Werkzeugtisch und quer zur Erstreckung der Greiferschiene vorgesehen ist, und wenn durch diese Bewegung der Greiferschiene das erste Betätigungselement beaufschlagbar ist. Durch die Ausgestaltung des Betätigungselements derart, dass dessen Betätigung von außen in einer Richtung, die quer, also transversal oder sogar senkrecht, zur Erstreckung der Greiferschiene orientiert ist, erfolgen kann, ist eine Absetzbewegung der Greiferschiene mit der die Betätigung des Betätigungselements bewirkenden Bewegung kombinierbar. Hierbei bietet vorzugsweise die Auflagekonsole oder der Werkzeugtisch, auf dem die Greiferschiene abgelegt werden soll, den festen Punkt, gegen das Betätigungselement durch die Transfereinrichtung gedrückt wird, wodurch es mit dem für die Verschiebung der Zugstange erforderlichen mechanischen Druck beaufschlagbar ist.

Eine Ausgestaltung der Erfindung kann vorsehen, dass die Zugstange durch eine Rückstellkraft oder Feder in der Halteposition gehalten ist und dass die Zugstange durch das erste Betätigungselement gegen die Rückstellkraft oder die Kraft der Feder zum Lösen der Kupplung relativ zum Kupplungsstück in die Löseposition zurückziehbar ist. Somit wird erreicht, dass die Zugstange selbsttätig in die Halteposition zurückkehrt, wenn die zuvor beschriebene Beaufschlagung des Betätigungselements entfällt, wenn also beispielsweise die zur Betätigung des Betätigungselements ausgeführte Bewegung umgekehrt wird. Es ist somit ein Hin- und Herbewegen der Zugstange durch die Antriebsmittel der Transfereinheit durchführbar, ohne dass das Betätigungselement an seinem freien Ende auf Zug belastet werden muss.

Eine weitere Ausgestaltung der Erfindung kann vorsehen, dass an der Auflagekonsole oder dem Werkzeugtisch ein Führungselement ausgebildet ist, welches das Kupplungsgegenstück mit der Greiferschiene entlang der oder parallel zu der Betätigungsrichtung des ersten Betätigungselements in einem Aufnahmebereich verschiebbar führt. Dieser Aufnahmebereich umfasst insbesondere die Position der Greiferschiene relativ zu der Auflagekonsole oder dem Werkzeugtisch, die dem Ausgangspunkt für die Betätigung des ersten Betätigungselements bildet. Das Führungselement unterstützt somit die durch die Antriebsmittel der Transfereinrichtung ausgeführte Bewegung der Greiferschiene und der Greiferschienenkupplung zur Betätigung des Betätigungselements. In diesem Aufnahmebereich fixiert das Führungselement durch die Führung die Greiferschiene entlang der Verbindungsrichtung der Greiferschienenkupplung gegen ein Verschieben. Somit ist, wenn der Arretierungsmechanismus durch Zurückziehen der Zugstange freigegeben ist, das Kupplungsstück von dem Kupplungsgegenstück lösbar, indem die Transfereinrichtung das Kupplungsstück durch eine entlang der Verbindungsrichtung der Greiferschienenkupplung verlaufende Bewegung zurück zieht. Das Führungselement hält hierbei das Kupplungsgegenstück, das mit der Greiferschiene fest verbunden ist, zurück.

Besonders günstig ist es, wenn zur Betätigung des Betätigungselements die Auflagekonsole oder der Werkzeugtisch einen Auslösevorsprung hat, wenn der Auslösevorsprung durch ein Absenken der Greiferschiene mit ihrer Greiferschienenkupplung in Wirkverbindung mit dem ersten Betätigungselement gelangt und wenn durch die weitere Absenkbewegung über das erste Betätigungselement die Zugstange in ihrer Lösungsposition überführbar ist im Sinne eines Lösens der Kupplung. Der Auslösevorsprung ist vorzugsweise als Nocken oder Nase ausgebildet und/oder identisch zu dem Führungselement ausgebildet. Somit wird durch ein beim Werkzeugwechsel ohnehin notwendigen Absetzen der Greiferschiene auf einer Auflagekonsole oder einem Werkzeugtisch die Kupplung automatisch mit gelöst, wodurch die Transfereinrichtung das in Gebrauch die Greiferschiene aufnehmende oder tragende Kupplungsstück von dem Kupplungsgegenstück trennen kann, nachdem die Greiferschiene mit dem Kupplungsgegenstück auf der Auflagekonsole oder dem Werkzeugtisch abgelegt wurde. Die Betätigung der Greiferschienenkupplung ist somit durch Bewegungsabläufe ausführbar, die durch die Antriebsmittel der Transfereinrichtung ohnehin durchführbar sind, weshalb diese Antriebsmittel keiner zusätzlichen Weiterbildung bedürfen. Es ist somit insbesondere eine bereits bestehende Presse mit Transfereinrichtung mit der erfindungsgemäßen Greiferschienenkupplung aufrüstbar und betreibbar.

Eine Ausführungsform der Erfindung kann vorsehen, dass als erstes Betätigungselement ein Zahnrad oder Zahnsegment mit einem Schwenkarm vorgesehen ist, welcher Schwenkarm durch den Auslösevorsprung verschwenkbar ist, wodurch das Zahnrad oder Zahnsegment verdrehbar ist, und dass die Zugstange oder ein mit ihr verbundenes Teil eine Zahnstange hat, die mit dem Zahnrad oder Zahnsegment kämmt, so dass durch die Verschwenkung des Schwenkarms über die Verzahnung die Zugstange zurückziehbar ist. Das Zahnrad oder Zahnsegment mit dem Schwenkarm ist hierbei an dem Kupplungsstück drehbar gelagert, und das lose Ende des Schwenkarms bietet die Angriffsfläche für den Auslösevorsprung. Das Verzahnungsteil, das mit der Zahnstange kämmt, dient zur Umsetzung der Betätigungsbewegung des Betätigungselements in die Verschiebungsbewegung der Zugstange.

Bei einer alternativen Ausgestaltung kann es vorgesehen sein, dass als erstes Betätigungselement eine zweite Zahnstange vorgesehen ist, die mit einem Zahnrad oder einem Zahnsegment kämmt, welches mit einer Verzahnung der Zugstange kämmt und dass diese Betätigungszahnstange quer oder rechtwinklig zu der Zugstange verstellbar ist.

Besonders günstig ist es, wenn für den Angriff des Zahnrades einerseits an der Betätigungszahnstange und andererseits an der Zahnstange der Zugstange das Zahnrad oder Zahnsegment als Zahnwalze ausgebildet ist. Somit ist genügend Bewegungsfreiheit für die sich kreuzenden Zahnstangen gegeben.

Eine alternative Ausgestaltung kann zur Umsetzung der Betätigungsbewegung des Betätigungselements in die Verschiebungsbewegung der Zugstange vorsehen, dass das erste Betätigungselement ein Stößel mit einer Schrägfläche ist, die an einer Gegenfläche angreift, welche mit der Zugstange verbunden ist. Diese Gegenfläche kann beispielsweise durch ein abgerundetes Ende der Zugstange gebildet sein. Vorzugsweise sind die Schrägfläche des Stößels und die an der Zugstange angreifende Gegenfläche flächig aneinander liegende Schrägflächen. Hierdurch ergibt sich ein besonders geringer Materialverschleiß bei häufiger Betätigung des Betätigungselements.

Eine manuelle, die automatisierte Betätigung beispielsweise im Wartungsfall unterstützende Betätigung des Arretierungsmechanismus ist beispielsweise ausführbar, wenn als erstes Betätigungselement oder als zusätzliches Betätigungselement ein an dem Zahnrad angeordneter Werkzeugangriff vorgesehen ist, beispielsweise ein Mehrkant oder ein hohler Mehrkant sowie ein dazu passendes Werkzeug.

Eine im Wesentlichen kräftefreie Trennung der Greiferschienenkupplung ist ausführbar, wenn nach dem Zurückziehen der Zugstange das oder die Arretierungselemente gelöst und dadurch das Kupplungsstück gegenüber dem Kupplungsgegenstück entlang der Verbindungsrichtung der Greiferschienenkupplung in eine entkuppelte Position zurückziehbar ist.

Bei einer Ausgestaltung der Erfindung kann vorgesehen sein, dass zum Fixieren der Zugstange in Löseposition entgegen der auf diese wirkende Rückstellkraft oder Feder eine Rastmechanik mit einer Sperre vorgesehen ist, die in Halteposition der Zugstange außer Eingriff ist und in entkuppelter Position der Greiferschienenkupplung sperrt. Vorzugsweise rastet diese Sperre ein, sobald die Zugstange in ihre Löseposition verschoben wird. Somit kann die Beaufschlagung des Betätigungselements entfallen, sobald die Zugstange in die Löseposition überführt ist. Insbesondere kann somit das Kupplungsstück von der Auflagekonsole oder dem Werkzeugtisch entfernt werden, ohne dass die Zugstange die Arretierungselemente in die eine Verbindung mit dem Kupplungsgegenstück oder einem anderen Kupplungsgegenstück verhindernde Position drückt. Die Transfereinrichtung kann somit das von dem Kupplungsgegenstück gelöste Kupplungsstück an eine andere Position, beispielsweise zu einer anderen Auflagekonsole oder einem anderen Werkzeugtisch transportieren und dort mit einer anderen Greiferschiene oder einem anderen Werkzeug verbinden.

Zur Aktivierung der Zugstange kann es vorgesehen sein, dass die Sperre durch ein zweites Betätigungselement mechanisch betätigbar ist und dass das zweite Betätigungselement eine von außen einwirkende, im Wesentlichen parallel zur Verbindungsrichtung der Greiferschienenkupplung gerichtete Betätigung in eine Betätigung der Sperre umsetzt. Hierdurch ist die zur Verbindung des Kupplungsstücks mit einem Kupplungsgegenstück erforderliche Bewegung nutzbar für eine die Zugstange freigebende Betätigung der Sperre. Die Zugstange kann somit während des Arbeitsvorgangs der Greiferschienenkupplung in ihre Halteposition gelangen und dadurch die Arretierungselemente beaufschlagen, wodurch die Greiferschienenkupplung gegen ein Lösen gesichert ist.

Ein selbsttätiges Einfallen der Sperre, sobald die Zugstange in ihre Löseposition gelangt ist, kann dadurch erreicht werden, dass das zweite Betätigungselement einen schwenkbar gelagerten Hebelarm hat, dass durch die Schwenkbewegung des Hebelarms die Sperre quer zur Zugstange verstellbar ist und dass die Zugstange eine Aussparung hat, die nach Zurückziehen der Zugstange im Bereich der Sperre angeordnet ist, so dass die Sperre durch eine Federkraft durch die Verschwenkung des Hebelarms in die Aussparung eingreift und in Sperrstellung gelangt.

Zum Lösen der Sperre an der Greiferschiene oder dem mit dieser verbundenen Kupplungsgegenstück kann ein zweiter Auslösevorsprung angeordnet sein, welcher den die Sperre tragenden Hebelarm beim Schließen der Kupplung untergreift, verschwenkt und dadurch die Sperre außer Eingriff bringt. Somit wird die Zugstange freigegeben, sobald das den Hebelarm tragende Kupplungsstück mit dem Kupplungsgegenstück zusammengesetzt wird. Hierdurch kann die Zugstange wieder in ihre Halteposition gelangen, das oder die Arretierungselemente beaufschlagen und so die Greiferschienenkupplung fixieren. Die hierzu notwendige Verschiebung der Zugstange erfolgt vorzugsweise durch Federkraft. Der Auslösevorsprung ist vorzugsweise als Nocken ausgebildet. Besonders günstige Verhältnisse ergeben sich, wenn der die Sperre beaufschlagende Hebelarm und/oder der zweite Auslösevorsprung an den einander berührenden Stellen und Flächen abgeschrägt und/oder abgerundet sind. Hierdurch wird während des Arbeitsvorgangs der Greiferschienenkupplung die Verdrängung des Hebelarms durch den Auslösevorsprung in eine die Zugstange freigebende Verschiebung der Sperre umgesetzt.

Besonders günstige Verhältnisse ergeben sich, wenn der die Sperre beaufschlagende Hebelarm auf der einen Seite seiner Schwenklagerung die Sperre beaufschlagt und mit dem Auslösevorsprung zusammenwirkt und/oder wenn an dem die Sperre betätigenden Hebelarm auf der anderen Seite seiner Schwenklagerung eine Druckfeder angreift, die den Hebelarm und mit diesem die Sperre nach dem Zurückziehen des Kupplungsstücks aus dessen Kupplungsposition und von dem zweiten Auslösevorsprung weg in Gebrauchsstellung, also in die die Zugstange fixierende Stellung, bringt.

Eine materialsparende Ausführung ergibt sich, wenn das Führungselement als Zapfen ausgebildet ist, der in eine entsprechend ausgebildete Ausnehmung in der Gleitschiene oder dem Kupplungsgegenstück greift.

Bei einer Ausgestaltung kann vorgesehen sein, dass das Kupplungsstück an seiner Unterseite eine Ausnehmung aufweist, dass das erste Betätigungselement aus dieser Ausnehmung teilweise hervorsteht und dass diese Ausnehmung in Verbindungsrichtung der Greiferschienenkupplung offen ist. Somit ist zum einen das Betätigungselement durch die die Ausnehmung umgebende Begrenzung gegen unbeabsichtigte Betätigung geschützt und andererseits das Kupplungsstück von dem Kupplungsgegenstück entfernbar, während der Auslösevorsprung das Betätigungselement beaufschlagt und somit die Zugstange in ihrer Löseposition hält.

Eine besonders günstige Funktion des Arretierungsmechanismus ergibt sich, wenn das wenigstens eine Arretierungselement als Kugel ausgebildet ist und wenn die das Arrtierungselement aufnehmende Ausnehmung des Kupplungsgegenstücks eine Kugelhülse ist. Vorzugsweise ist eine als Arretierungselement wirkende Kugel vorgesehen, die von der Zugstange in Halteposition radial nach außen gedrückt wird und so die Greiferschienenkupplung fixiert, Weiterbildungen weisen jedoch einen Kranz von derartige Kugeln auf.

Eine automatische Zentrierung beim Verbinden der Greiferschienenkupplung wird beispielsweise bewirkt, wenn das Kupplungsstück einen konusartig geformten Abschnitt und das Kupplungsgegenstück einen entsprechend konusartig geformten Aufnahmebereich hat und wenn die Kupplungsarretierung konzentrisch zu dem konusartigen Abschnitt des Kupplungsstücks angeordnet ist. Somit wird das Kupplungsstück in das Kupplungsgegenstück eingesteckt, und der Innenraum des Kupplungsstücks ist für die Aufnahme des Arretierungsmechanismus nutzbar. Es ergibt sich mithin eine besonders kurze Abmessung der Greiferschienenkupplung.

Eine Ausgestaltung der Erfindung kann vorsehen, dass die Verbindungsrichtung der Greiferschienenkupplung quer zur Erstreckung der Greiferschiene ausgerichtet ist. Somit sind an der Greiferschiene mehrere Aufnahmepunkte der Transfereinrichtung vorsehbar, die jeweils mit einer Greiferschienenkupplung gemäß der Erfindung ausgerüstet sind, wobei diese Greiferschienenkupplungen durch einen gemeinsamen Arbeitsgang simultan betätigbar sind.

Nachstehend sind Ausführungsbeispiele der Erfindung anhand der Zeichnungen näher beschrieben. Es zeigt:
- Fig. 1: eine erfindungsgemäße Transfereinrichtung an einer Presse von oben,
- Fig. 2: in einer Detailansicht der Presse gemäß Fig. 1 eine Schnittdarstellung einer Greiferschienenkupplung,
- Fig. 3: eine seitliche Schnittdarstellung der Greiferschie- nenkupplung gemäß Fig. 2 in entkuppelter Stellung,
- Fig. 4: eine Schnittdarstellung der Greiferschienenkupplung gemäß Fig. 3 von oben,
- Fig. 5: eine Sicht auf die Greiferschienenkupplung gemäß Fig. 3 entlang der Verbindungsrichtung der Greifer- schienenkupplung,
- Fig. 6: eine Seitenansicht in Schnittdarstellung der Greifer- schienenkupplung gemäß Fig. 2 in eingekuppelter Po- sition,
- Fig. 7: eine Schnittdarstellung der Greiferschienenkupplung gemäß Fig. 6 von oben und
- Fig. 8: eine Ansicht der Greiferschienenkupplung gemäß Fig. 6 mit Blickrichtung entlang der Verbindungsrichtung der Greiferschienenkupplung.

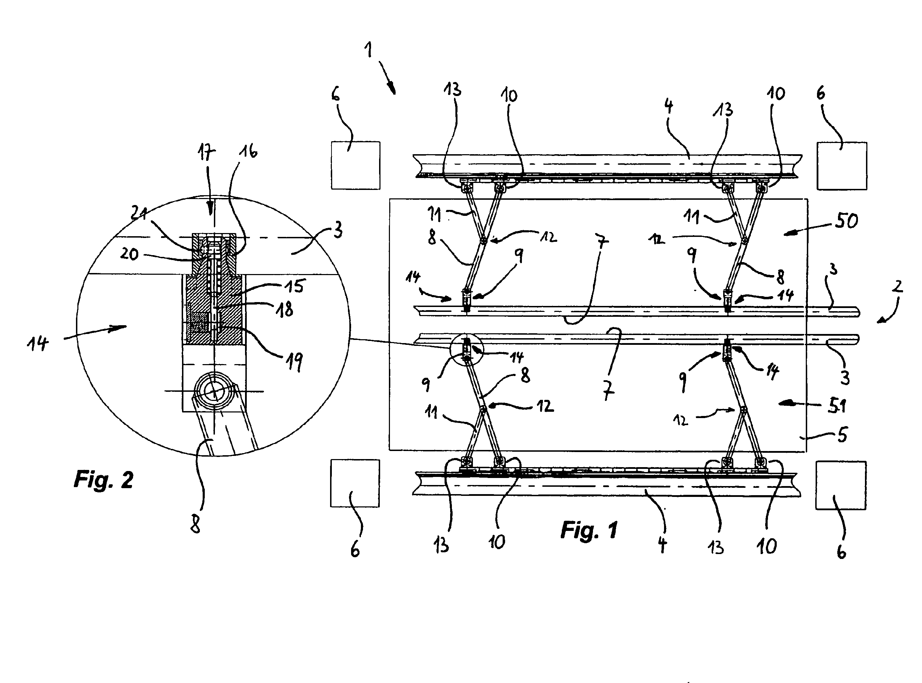

Fig. 1 zeigt eine allgemein mit 1 bezeichnete Presse zum Herstellen oder Formen von Werkstücken in einer Prinzipdarstellung von oben. Die Presse 1 hat eine Transfereinrichtung 2 mit einem ersten Teil 50, der eine Greiferschiene 3 trägt und an einer Traverse 4 befestigt ist. Ein zweiter Teil 51 der Transfereinrichtung 2 mit einer zweiten Greiferschiene 3 ist spiegelsymmetrisch zu dem ersten Teil 50 der Transfereinrichtung 2 mit der ersten Greiferschiene 3 ausgebildet und an einer zweiten Traverse 4 befestigt. Die Greiferschienen 3 bilden somit ein Greiferschienenpaar, mit dem auf dem Arbeitstisch 5 abgestellte, nicht dargestellte Werkstücke gegriffen, verschoben beziehungsweise umgesetzt werden können, wie es beispielsweise aus der DE 10 2004 023 525 A1 bekannt ist.

Die Presse 1 weist ferner ein nicht weiter dargestelltes Presswerkzeug auf, das auf Ständern 6 abgestützt und über dem Arbeitstisch 5 angeordnet ist. Dieses Presswerkzeug ist gegen den Arbeitstisch verfahrbar, wodurch es in Berührkontakt mit den Werkstücken geführt wird und diese formgestaltend bearbeitet. Die Greiferschienen 3 bilden somit Greifwerkzeuge, an denen Greiferbereiche 7 ausgebildet sind, mit denen die Werkstücke fassbar sind.

Um die Werkstücke zu den verschiedenen, auf dem Arbeitstisch 5 vorgesehenen Umformstellen zu transportieren, ist die Transfereinrichtung 2 beweglich ausgebildet und können die Greiferschienen 3 im Bereich des Arbeitstisches 5 bewegen. Jeder Teil 50, 51 der Transfereinrichtung 2 weist hierzu jeweils ein Paar Hebel 8 auf, die an einem Ende an einem mit der Greiferschiene 3 verbundenen Ansatz 9 und an ihrem anderen Ende mit einem Verschiebeelement 10 gelenkig verbunden sind. Ungefähr in der Mitte des Hebels 8 ist ein Schwenkarm 11 an einer Anlenkstelle 12 angelenkt, der an seinem freien Ende mit einem zweiten Verschiebeelement 13 gelenkig verbunden ist. Die Verschiebeelemente 10 und 13 sind an der Traverse 4 derart gelagert, dass sie entlang der Erstreckungsrichtung der Traverse 4 verschiebbar sind. Die Verschiebung der Verschiebeelemente 10, 13 erfolgt zum Beispiel durch einen nicht näher gezeigten Spindelantrieb oder mittels Arbeitszylindern. Werden die Verschiebeelemente 10 synchron mit den Verschiebeelementen 13 bewegt, so ergibt sich eine Bewegung der Greiferschienen 3 in deren Erstreckungsrichtung. Werden die Verschiebeelemente 13 unter sich synchron aber gegenläufig zu den Verschiebeelementen 10 bewegt, so resultiert eine Bewegung der Greiferschienen über den Arbeitstisch 5 quer zur Erstreckungsrichtung der Greiferschienen 3. Durch entsprechende Synchronisation der Bewegung der Verschiebeelemente 10, 13 sind somit Vorschub- und Rücklaufbewegungen zum schrittweisen Verschieben der Werkstücke zu einzelnen Umformstellen auf dem Arbeitstisch ausführbar.

Die Greiferschienen 3 sind zwar im Betrieb fest, aber über eine in den Fig. 2 bis 8 näher dargestellte Greiferschienenkupplung 14 lösbar an dem jeweiligen Teil 50, 51 der Transfereinrichtung 2 befestigt. Diese Greiferschienenkupplung 14 weist ein Kupplungsstück 15 auf, das in einer hülsenförmigen Ausnehmung des Ansatzes 9 befestigt ist. An der Greiferschiene 3 ist ein zu diesem Kupplungsstück passendes Kupplungsgegenstück 16 in einer Ausnehmung angeordnet. In eingekoppelter Position greift das Kupplungsstück 15 teilweise in eine passende Ausnehmung des Kupplungsgegenstücks 16 ein.

Um die Greiferschienenkupplung 14 in eingekuppelter Position zu arretieren, ist im Inneren des Kupplungsstücks 15 ein Arretierungsmechanismus 17 angeordnet. Dieser Arretierungsmechanismus 17 weist eine Zugstange 18 auf, die im Wesentlichen parallel zur Verbindungsrichtung der Greiferschienenkupplung 14 ausgerichtet ist. Die Zugstange 18 ist durch ein Betätigungselement 19 entlang ihrer Achse zwischen einer Halteposition und einer Löseposition verschiebbar. An dem von dem Betätigungselement 19 entfernten Ende der Zugstange 18 ist eine konusförmige Spitze 20 ausgebildet, die in der Halteposition der Zugstange 18 als Arretierungselemente wirkende Kugeln 21 radial nach außen in eine als umlaufende Nut 22 in einer Kugelhülse 23 ausgebildeten Ausnehmung drückt. In eingekuppelter Position, also wenn das Kupplungsstück 15 in das Kupplungsgegenstück 16 eingesteckt ist, wird die Greiferschienenkupplung 14 formschlüssig gegen ein Lösen der Verbindung gesichert, sobald die Zugstange 18 in der Halteposition ist.

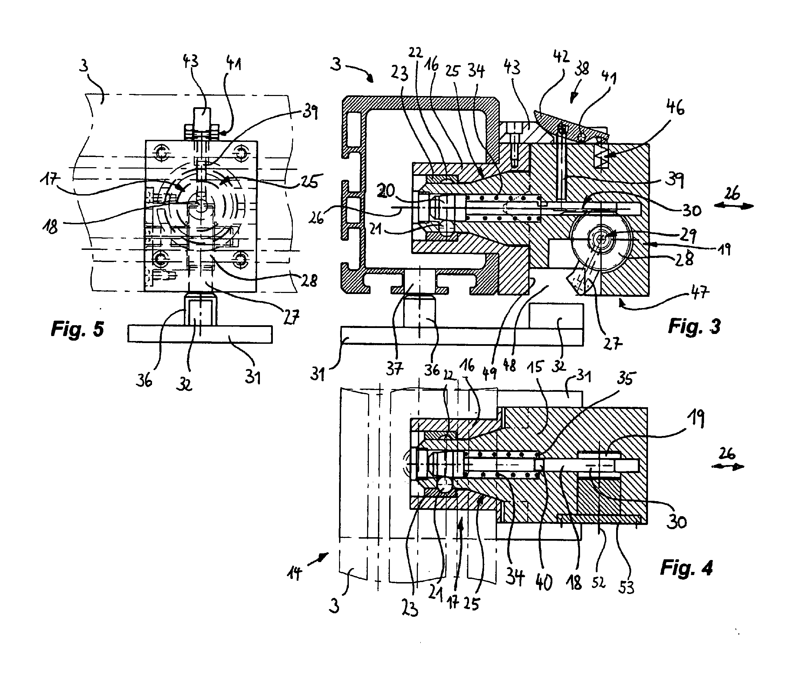

Fig. 3 bis 5 zeigen die als Hohl-Stranggussprofil ausgeformte Greiferschiene 3, in die das Kupplungsgegenstück 16 eingesteckt ist. Das Kupplungsgegenstück 16 weist eine durchgehende Ausnehmung 24 auf, in der ein konusförmiger Abschnitt 25 ausgebildet ist, der eine passend hierzu geformte konusförmige Außenfläche des Kupplungsstücks 15 aufnimmt zur spielfreien Befestigung des Kupplungsstücks 15 an der Greifschiene 3. Im Inneren des Kupplungsstücks 15 ist in einer gestuften Bohrung eine Zugstange 18 angeordnet, die durch ein Betätigungselement 19 in Verbindungsrichtung 26 der Greiferschienenkupplung 14 verschiebbar ist. Das Betätigungselement 19 weist einen Schwenkarm 27 auf, der von außen mechanisch, insbesondere durch Druckbeaufschlagung, betätigbar ist, wobei diese Betätigung quer zur Verbindungsrichtung 26 der Greiferschienenkupplung 14 gerichtet ist. Das Betätigungselement 19 weist ferner ein Zahnrad 28 auf, das in einer Lagerung 29 um seine Ritzelwelle 52 drehbar gelagert ist und welches mit dem Schwenkarm 27 fest verbunden ist. Das Zahnrad 28 ist durch einen Deckel 53 nach außen abgedeckt. Die Verzahnung des Zahnrads 28 kämmt mit einer Verzahnung einer an der Zugstange 18 ausgebildeten Zahnstange 30. Somit ist durch ein Betätigen, insbesondere Verschwenken des Schwenkarms 27 die Zugstange 18 verschiebbar, wobei die Betätigungsbewegung durch das Zahnrad 28 in die Verschiebung der Zugstange umgesetzt wird.

Fig. 3 bis 5 zeigen dabei die Greiferschienenkupplung 14 in eingekuppelter Stellung, wobei die gesamte Anordnung der Greiferschiene 3 mit der Greiferschienenkupplung 14 über einer Auflagekonsole 31 positioniert ist. Wird nun die Anordnung von Greiferschiene 3 mit Greiferschienenkupplung 14 quer zur Erstreckungsrichtung der Greiferschiene 3, die in Fig. 3 senkrecht auf der Zeichnungsebene steht, auf die Auflagekonsole 31 zu bewegt, so gelangt ein an der Auflagekonsole 31 ausgebildeter Auslösevorsprung 32 in Kontakt mit dem freien Ende des Schwenkarms 27 und verschwenkt diesen in eine entsprechend ausgebildete Aufnahme 33 des Kupplungsstücks 15 hinein. Hierdurch wird eine Drehbewegung des Zahnrads 28 und weiter eine Verschiebung der Zugstange 18 nach rechts bewirkt, wodurch die Spitze 20 der Zugstange 18 aus dem Bereich der Kugeln 21 gelangt. Hierdurch wird der Arretierungsmechanismus 17 gelöst.

Die in Fig. 3 und 4 in ihrer Halteposition dargestellte Zugstange 18 wird durch eine Feder 34 in dieser Halteposition gehalten. Durch die beschriebene Bewegung der Greiferschiene 3 auf die Auflagekonsole 31 zu, in deren Verlauf der abgewinkelt ausgebildete Schwenkarm 27 des Betätigungselements 19 beaufschlagt und verschwenkt wird, wird die Zugstange 18 gegen die Rückstellkraft dieser zwischen der Spitze 20 und einem Anschlag 35 eingespannten Feder 34 in die weiter rechts angeordnete Löseposition zurückgezogen.

An der Auflagekonsole 31 ist ferner ein als Führungselement wirkender Zentrierbolzen 36 ausgebildet, der an seinem Ende eine als Zentrierhilfe dienende Abschrägung oder Anfasung aufweist und in eine Bohrung 37 der Gleitschiene 3 eingeführt wird, bevor der Auslösevorsprung 32 mit dem Schwenkarm 27 in Berührung kommt. Somit wird die Greiferschiene 3 mit der Greiferschienenkupplung 14 während der Bewegung auf die Auflagekonsole 31 zu in einem Bewegungsabschnitt geführt, wenn die Greiferschiene 3 mit der Greiferschienenkupplung 14 in den Aufnahmebereich der Auflagekonsole 31 gelangt.

Wie bereits beschrieben, gelangt der Auslösevorsprung 32 durch ein Absenken der Greiferschiene 3 mit ihrer Greiferschienenkupplung 14 in Wirkverbindung mit dem Betätigungselement 19, wodurch durch eine weitere Absenkbewegung die Zugstange 18 über das Betätigungselement 19 in ihre Löseposition überführt wird. Somit ist der Arretierungsmechanismus 17 freigegeben, und die Greiferschienenkupplung 14 ist lösbar. Das Kupplungsstück 15 kann somit ohne nennenswerten Kraftaufwand von dem Kupplungsgegenstück 16 getrennt werden, wobei das Kupplungsgegenstück 16 mit der Greiferschiene 3 durch den Zentrierbolzen 36 auf der Auflagekonsole 31 zurückgehalten wird.

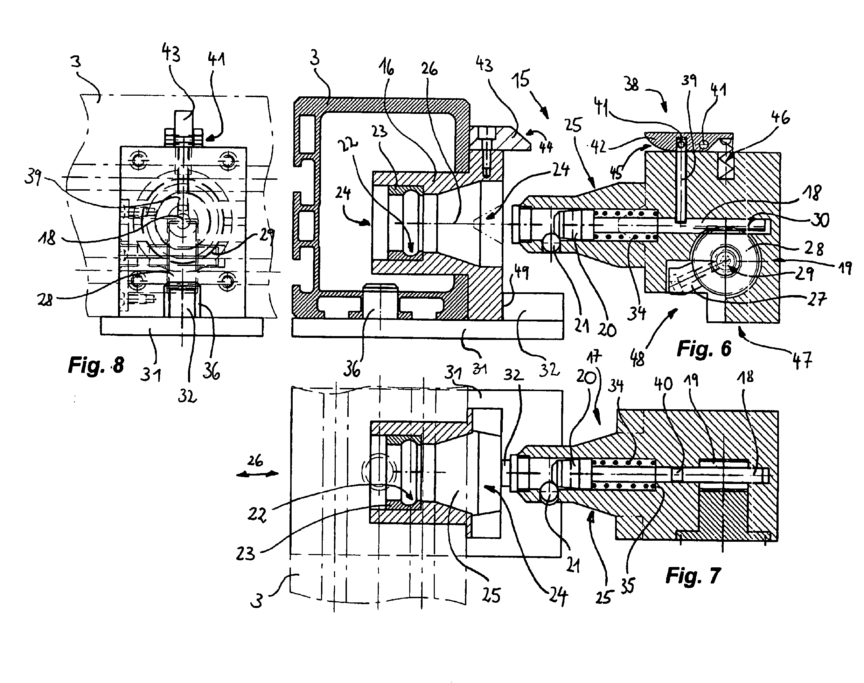

Die sich hieraus ergebende Situation ist in Fig. 6 bis 8 dargestellt. Das Kupplungsstück 15 ist nun durch eine Verschiebung entlang der Verbindungsrichtung 26 der Greiferschienenkupplung 14 aus dem Kupplungsgegenstück 16 herausgezogen. Dieses Herausziehen war möglich, weil durch das Absenken der Greiferschienenkupplung 14 und das Zusammenwirken des Auslösevorsprungs 21 mit dem Betätigungselement 19 die Zugstange 18 in die in Fig. 6 dargestellte Löseposition verschoben wurde, wodurch die als Arretierungselemente wirkenden Kugeln 21 freigegeben wurden.

Das Umsetzen der Absenkbewegung der Greiferschienenkupplung 14 in eine Verschiebebewegung der Zugstange 18 ist in einem anderen Ausführungsbeispiel durch eine Kombination einer senkrecht zu der Zugstange 18 in Fig. 6 und in Zeichnungsebene verlaufenden Zahnstange, die mit einem statt des Zahnrads 28 in Fig. 6 vorgesehenen Verzahnungselement kämmt, bewirkt, wobei dieses Verzahnungselement wie in Fig. 6 gezeigt eine Zahnstange 30 der Zugstange 18 betätigt. Das Verzahnungsteil ist in diesem Ausführungsbeispiel als breit ausgeführte Zahnwalze ausgebildet, wodurch die nun vorgesehenen, in ihrer Wirkrichtung sich kreuzenden Zahnstangen aneinander vorbeiführbar sind und dennoch mit dem Verzahnteil gleichzeitig kämmen können. Der in Fig. 6 gezeigte Schwenkarm 27 ist in diesem Ausführungsbeispiel verzichtbar. Die zusätzliche Zahnstange wird ebenfalls durch einen Auslösevorsprung 21 beim Absenken der Greiferschienen 14 betätigt.

Ein weiteres Ausführungsbeispiel unterscheidet sich von dem Ausführungsbeispiel gemäß Fig. 3 bis 8 nur durch die Ausgestaltung des Betätigungselements 19. Zur Erläuterung dieses nicht weiter dargestellten Ausführungsbeispiels wird daher auf die Fig. 3 bis 8 Bezug genommen, und es wird lediglich die Abweichung von diesen Figuren beschrieben. Statt der Verzahnungsteile 28, 30 ist ein Stößel mit einer Schrägfläche als Betätigungselement ausgebildet, der ebenfalls in der Zeichnungsebene in Fig. 6 und senkrecht zu der Zugstange 18 verschiebbar ist, wobei diese Schrägfläche die Zugstange 18 beaufschlagt und verschiebt. Die Zugstange 18 weist hierzu eine an ihrem Ende ausgebildete, entsprechend schräg ausgeführte Gegenfläche auf, die an dieser Schrägfläche aufliegt und so angeordnet ist, dass eine Betätigung des Stößels beim Absenken ein Zurückziehen der Zugstange 18 in die Löseposition erzwingt.

Zusätzlich oder alternativ zu dem Schwenkarm 27 weist das Zahnrad 28 in Fig. 3 und 6 einen Werkzeugangriff in der Ritzelwelle 53 in Form eines Mehrkants auf, in den ein entsprechend passendes Werkzeug einführbar ist für eine manuelle Betätigung des Betätigungselements 19 in Fig. 3 bis 8.

Wie bereits beschrieben, wird durch das Zurückziehen der Zugstange 18 in die Löseposition der Arretierungsmechanismus 17 gelöst, wodurch das Kupplungsstück 15 gegenüber dem Kupplungsgegenstück 16 entlang der Verbindungsrichtung 26 der Greiferschienenkupplung 14 in eine entkuppelte Position, wie in Fig. 6 dargestellt, zurückziehbar ist. Sobald die Zugstange 18 durch das Betätigungselement 19 in die Löseposition überführt wird, gelangt eine an einer Rastmechanik 38 vorgesehene Sperre 39 in Eingriff mit einer an der Zugstange 18 ausgebildeten Aussparung 40, wodurch die Zugstange 18 gegen die Federkraft der Feder 34 in der Löseposition fixiert ist. Somit kann sich die Feder 34 nicht entspannen und die Zugstange 18 in die Halteposition überführen. Das Kupplungsstück 15 ist daher frei in die Ausnehmung des Kupplungsgegenstücks 16 einsteckbar und aus diesem entfernbar.

Die Rastmechanik 38 weist einen um den Drehpunkt 41 an dem Kupplungsstück 15 gelagerten Hebelarm 42 auf, an dem die Sperre 39 angelenkt ist. Somit wird die Sperre durch eine Schwenkbewegung des Hebelarms 42 quer zur Zugstange 18 verstellt und gibt die Zugstange 18 wieder frei. An dem Kupplungsgegenstück 16 ist ein Auslösevorsprung 43 befestigt, der den Hebelarm 42 untergreift, sobald das Kupplungsstück 15 in das Kupplungsstück 16 eingeführt wird. Durch dieses Untergreifen wird der Hebelarm 42 in Fig. 6 nach oben verschwenkt, wodurch die Sperre 39 außer Eingriff gelangt, die Zahnstange 18 freigegeben wird, und die Feder 34 sich entspannt und die Zahnstange 18 in die Halteposition überführt. Zur Erreichung einer besseren Funktionalität weist der Auslösevorsprung 43 eine Abschrägung 44 auf, die passend ausgebildet ist zu einer entsprechenden Abrundung 45 am Hebelarm 42. Während der Anlenkungspunkt der Sperre 39 und der Angriffspunkt des Auslösevorsprungs 43 auf einer Seite des als Schwenklagerung dienenden Drehpunkts 41 angeordnet sind, ist auf der anderen Seite dieser Schwenklagerung eine Druckfeder 46 angeordnet, die den Hebelarm 42 und somit die Sperre 39 in die Aussparung 40 drückt, also in Gebrauchsstellung bringt, sobald die Zugstange 18 in die Löseposition gelangt ist.

Wie in Fig. 3 gezeigt, weist das Kupplungsstück 15 an seiner Unterseite 47 eine Ausnehmung 48 auf, aus der das freie Ende des Schwenkarms 27 hervorsteht, um in Wirkkontakt mit dem Auslösevorsprung 32 zu gelangen. Das freie Ende des Schwenkarms 27 steht hierbei aber nicht über die Begrenzungsfläche der Unterseite 47 heraus, so dass die Greiferschiene 3 mit Greiferschienenkupplung 14 auf einer Unterlage, die keinen Auslösevorsprung 32 aufweist, absetzbar ist, ohne dass das Betätigungselement 19 betätigt wird. Wie in Fig. 6 ersichtlich, ist die zur Aufnahme des Auslösevorsprungs 32 vorgesehene Ausnehmung 48 in Verbindungsrichtung der Greiferschienenkupplung 14 offen ausgebildet. Somit ist das Kupplungsstück 15 von dem in die Ausnehmung 48 eingeführten Auslösevorsprung 32 abziehbar, ohne dass Teile des Kupplungsstücks 15 oder andere Teile dieses Abziehen behindern würden. Die zu dem Kupplungsgegenstück weisende Seitenfläche des Auslösevorsprungs 32 liegt hierbei an einer Anlagefläche 49 des Kupplungsgegenstücks 16 an und hält dieses beim Zurückziehen des Kupplungsstücks 15 fest.

Wie aus den Fig. 5 und 8 ersichtlich ist, ist der Arretierungsmechanismus 17 mit der Zugstange 18 konzentrisch zu dem konusartigen Abschnitten 25 des Kupplungsgegenstücks 16 beziehungsweise des Kupplungsstücks 15 angeordnet.

Jeder der vier Ansätze 19 in Fig. 1 weist eine beschriebene Greiferschienenkupplung 14 auf, wobei die Verbindungsrichtung 26 der Greiferschienenkupplung 14 jeweils quer zur Erstrek-kung der Greiferschienen 3 ausgerichtet ist und in der Zeichnungsebene verläuft. Die Betätigung des Arretierungsmechanismus 17, also das Absenken der Greiferschienenkupplung 14, geschieht durch Absenken der Transfereinrichtung 2 mit samt der Traversen 4.

Die Erfindung betrifft eine Transfereinrichtung 2 insbesondere für eine Presse 1 mit Greiferschienen 3 zum Fassen und Umsetzen von Werkstücken auf einen Arbeitstisch 5, wobei die Greiferschienen 3 durch die Transfereinrichtung 2 in einer horizontalen Ebene und vertikal bewegbar sind. Die Greiferschienen 3 sind durch Greiferschienenkupplungen 14 mit den jeweiligen Teilen 50, 51 der Transfereinrichtung 2 verbunden, wobei ein Arretierungsmechanismus 17 mit einer Zugstange 18 vorgesehen ist, der die Greiferschienenkupplung 14 arretiert oder freigibt. Zur Betätigung des Arretierungsmechanismus 17 ist ein Betätigungselement 19 vorgesehen, dass die Zugstange 18 zwischen einer Halteposition und einer Löseposition verschiebt und durch ein Absenken oder Anheben der Greiferschienenkupplung 14 betätigbar ist. Der Arretierungsmechanismus 17 weist ferner ein Federelement 34 auf, dass die Zugstange 18 in der Halteposition hält. Der Arretierungsmechanismus 17 weist schließlich eine Rastmechanik 38 mit einer Sperre 39 auf, die die Zugstange 18 in Löseposition fixiert und die beim Einkuppeln der Greiferschienenkupplung 14 automatisch freigegeben wird.

## Patentansprüche

1. Presse zum Herstellen oder Formen von in mehreren Schritten ihre endgültige Form erlangenden Werkstücken, mit einer Transfereinrichtung (2) zum schrittweisen Verschieben der Werkstücke zu einzelnen Umformstellen der Presse, wobei diese Transfereinrichtung (2) wenigstens eine oder zwei in Vorschubrichtung für die Vorschub- und Rücklaufbewegung hin- und herbewegbare, Greiferteile oder Greiferbereiche (7) zum Erfassen der Werkstücke aufweisende Greiferschienen (3) hat, die zum Erfassen der Werkstücke und zum Bewegen in Vorschubrichtung und anschließend wieder in Ausgangsstellung verstellbar sind, die Transfereinrichtung (2) wenigstens eine Greiferschienenkupplung (14) mit einem Kupplungsstück (15) und einem mit der Greiferschiene (3) fest verbundenen, zu dem Kupplungsstück (15) passend ausgebildetes Kupplungsgegenstück (16) aufweist, das Kupplungsstück (15) zum Werkzeugwechsel von dem Kupplungsgegenstück (16) trennbar und mit diesem verbindbar ist und das Kupplungsstück (15) einen Arretierungsmechanismus (17) hat, **dadurch gekennzeichnet, dass** der Arretierungsmechanismus (17) eine Zugstange (18) aufweist, die im Wesentlichen parallel zur Verbindungsrichtung (26) der Greiferschienenkupplung (14) ausgerichtet ist und durch ein erstes Betätigungselement (19) zwischen einer Halteposition und einer Löseposition der Greiferschienenkupplung (14) verschiebbar ist, dass die Zugstange (18) in der Halteposition wenigstens ein Arretierungselement (21) quer zur Verbindungsrichtung (26) der Greiferschienenkupplung (14) und radial nach außen in eine Ausnehmung (22) des Kupplungsgegenstücks (16) drückt, dass das erste Betätigungselement (19) von außen mechanisch betätigbar ist und dass durch das erste Betätigungselement (19) eine quer zur Verbindungsrichtung (26) der Greiferschienenkupplung (14) gerichtete Betätigung in die Verschiebung der Zugstange (18) umsetzbar ist.

2. Presse nach Anspruch 1, **dadurch gekennzeichnet, dass** zur Betätigung des ersten Betätigungselements (19) eine Bewegung der Greiferschiene (3) mit ihrer Greiferschienenkupplung (14) relativ zu einer Auflagekonsole (31) oder einem Werkzeugtisch (5) quer zur Erstreckung der Greiferschiene (3) vorgesehen ist und dass durch diese Bewegung der Greiferschiene (3) das erste Betätigungselement (19) beaufschlagbar ist.

3. Presse nach Anspruch 1 oder 2, **dadurch gekennzeichnet, dass** die Zugstange (18) durch eine Rückstellkraft oder Feder (34) in der Halteposition gehalten ist und dass die Zugstange (18) durch das erste Betätigungselement (19) gegen die Rückstellkraft oder die Kraft der Feder (34) zum Lösen der Greiferschienenkupplung (14) relativ zum Kupplungsstück (15) in die Löseposition zurückziehbar ist.

4. Presse nach einem der Ansprüche 1 bis 3, **dadurch gekennzeichnet, dass** an der Auflagekonsole (31) oder dem Werkzeugtisch (5) ein Führungselement (32, 36) ausgebildet ist, welches das Kupplungsgegenstück (16) mit der Greiferschiene (3) entlang der oder parallel zu der Betätigungsrichtung des ersten Betätigungselements (19) in einem Aufnahmebereich verschiebbar führt und in diesem Aufnahmebereich entlang der Verbindungsrichtung (26) der Greiferschienenkupplung (14) gegen ein Verschieben fixiert, und dass das Führungselement (36) insbesondere als Zapfen ausgebildet ist, der in eine entsprechend ausgebildete Ausnehmung (37) in der Greiferschiene (3) oder dem Kupplungsgegenstück (16) greift.

5. Presse nach einem der Ansprüche 1 bis 4, **dadurch gekennzeichnet, dass** die Auflagekonsole (31) oder der Werkzeugtisch (5) einen Auslösevorsprung (32) hat, dass der Auslösevorsprung (32) durch ein Absenken der Greiferschiene (3) mit ihrer Greiferschienenkupplung (14) in Wirkverbindung mit dem ersten Betätigungselement (19) gelangt und dass durch die weitere Absenkbewegung über das erste Betätigungselement (19) die Zugstange (18) in ihre Löseposition überführbar ist im Sinne eines Lösens der Greiferschienenkupplung (14).

6. Presse nach einem der Ansprüche 1 bis 5, **dadurch gekennzeichnet, dass** als erstes Betätigungselement (19) ein Zahnrad (28) oder Zahnsegment mit einem Schwenkarm (27) vorgesehen ist, welcher Schwenkarm (27) durch den Auslösevorsprung (32) verschwenkbar ist, wodurch das Zahnrad (28) oder Zahnsegment verdrehbar ist, und dass die Zugstange (18) oder ein mit ihr verbundenes Teil eine Zahnstange (30) hat, die mit dem Zahnrad (28) oder Zahnsegment kämmt, so dass durch die Verschwenkung des Schwenkarms (27) über die Verzahnung die Zugstange (18) zurückziehbar ist.

7. Presse nach einem der Ansprüche 1 bis 6, **dadurch gekennzeichnet, dass** als erstes Betätigungselement (19) oder als zusätzliches Betätigungselement ein an dem Zahnrad (28) angeordneter Werkzeugangriff, beispielsweise ein Mehrkant oder ein hohler Mehrkant sowie ein dazu passendes Werkzeug vorgesehen sind.

8. Presse nach einem der Ansprüche 1 bis 7, **dadurch gekennzeichnet, dass** nach dem Zurückziehen der Zugstange (18) das oder die Arretierungselemente (21) gelöst und dadurch das Kupplungsstück (15) gegenüber dem Kupplungsgegenstück (16) entlang der Verbindungsrichtung (26) der Greiferschienenkupplung (14) in eine entkuppelte Position zurückziehbar ist.

9. Presse nach einem der Ansprüche 1 bis 8, **dadurch gekennzeichnet, dass** zum Fixieren der Zugstange (18) in Löseposition entgegen der auf diese wirkende Rückstellkraft oder Feder (34) eine Rastmechanik (38) mit einer Sperre (39) vorgesehen ist, die in Halteposition der Zugstange (18) außer Eingriff ist und in entkuppelter Position der Greiferschienenkupplung (14) sperrt, dass die Sperre (39) insbesondere durch ein zweites Betätigungselement (42) mechanisch betätigbar ist und dass das zweite Betätigungselement (42) eine von außen einwirkende, im Wesentlichen parallel zur Verbindungsrichtung (26) der Greiferschienenkupplung (14) gerichtete Betätigung in eine Betätigung der Sperre (39) umsetzt.

10. Presse nach einem der Ansprüche 1 bis 9, **dadurch gekennzeichnet, dass** das zweite Betätigungselement (42) einen schwenkbar gelagerten Hebelarm (42) hat, dass durch die Schwenkbewegung des Hebelarms (42) die Sperre (39) quer zur Zugstange (18) verstellbar ist und dass die Zugstange (18) eine Aussparung (40) hat, die nach Zurückziehen der Zugstange (18) im Bereich der Sperre (39) angeordnet ist, so dass die Sperre (39) durch eine Federkraft (46) durch die Verschwenkung des Hebelarms (42) in die Aussparung (40) eingreift und in Sperrstellung gelangt.

11. Presse nach einem der Ansprüche 1 bis 10, **dadurch gekennzeichnet, dass** zum Lösen der Sperre (39) an der Greiferschiene (3) oder dem mit dieser verbundenen Kupplungsgegenstück (16) ein zweiter Auslösevorsprung (43) angeordnet ist, welcher den die Sperre (39) tragenden Hebelarm (42) beim Schließen der Greiferschienenkupplung (14) untergreift, verschwenkt und dadurch die Sperre (39) außer Eingriff bringt und dass der die Sperre (39) betätigende Hebelarm (42) insbesondere auf der einen Seite seiner Schwenklagerung (41) die Sperre (39) beaufschlagt und mit dem zweiten Auslösevorsprung (43) zusammenwirkt.

12. Presse nach einem der Ansprüche 1 bis 11, **dadurch gekennzeichnet, dass** an dem die Sperre (39) betätigenden Hebelarm (42) auf der anderen Seite seiner Schwenklagerung (41) eine Druckfeder (46) angreift, die den Hebelarm (42) und die Sperre (39) nach dem Zurückziehen des Kupplungsstücks (15) aus seiner Kupplungsposition und von dem zweiten Auslösevorsprung (43) weg in Gebrauchsstellung bringt.

13. Presse nach einem der Ansprüche 1 bis 12, **dadurch gekennzeichnet, dass** das Kupplungsstück, (15) an seiner Unterseite (47) eine Ausnehmung (48) aufweist, dass das erste Betätigungselement (19) aus dieser Ausnehmung (48) teilweise hervorsteht, dass diese Ausnehmung (48) in Verbindungsrichtung (26) der Greiferschienenkupplung (14) offen ist.

14. Presse nach einem der Ansprüche 1 bis 13, **dadurch gekennzeichnet, dass** das wenigstens eine Arretierungselement (21) als Kugel ausgebildet ist und dass die das Arretierungselement (21) aufnehmende Ausnehmung (22) des Kupplungsgegenstücks (16) eine Kugelhülse (23) ist.

15. Presse nach einem der Ansprüche 1 bis 14, **dadurch gekennzeichnet, dass** das Kupplungsstück (15) einen konischen Abschnitt (25) und das Kupplungsgegenstück (16) einen entsprechend konischen Aufnahmebereich hat und dass die Kupplungsarretierung (17) konzentrisch zu dem konusartigen Abschnitt (25) des Kupplungsstücks (15) angeordnet ist.

## Claims

1. Press for manufacturing or forming workpieces that attain their final shape over a number of steps, with a transfer device (2) for moving the workpieces along stepwise to individual shaping stations of the press, this transfer device (2) having at least one or two gripper rails (3) that are movable back and forth in the direction of advance for the advance and return movement and that comprise gripper parts or gripper regions (7) for holding the workpieces, said gripper rails being adjustable for holding the workpieces and for moving in the direction of advance and then back into the starting position, the transfer device (2) comprising at least one gripper rail coupling (14) with a coupling member (15) and a mating coupling member (16) constructed to fit the coupling member (15) and fixedly connected to the gripper rail (3), the coupling member (15) being detachable from the mating coupling member (16) for changing the tool and being connectable thereto and the coupling member (15) having a locking mechanism (17), **characterised in that** the locking mechanism (17) has a tie rod (18) which is aligned substantially parallel to the direction of connection (26) of the gripper rail coupling (14) and is movable by a first actuating element (19) between a holding position and a release position of the gripper rail coupling (14), **in that** the tie rod (18) in the holding position presses at least one locking element (21) transversely with respect to the direction of connection (26) of the gripper rail coupling (14) and radially outwards into a recess (22) of the mating coupling member (16), **in that** the first actuating element (19) can be mechanically actuated from outside, and **in that** by means of the first actuating element (19) an actuation directed transversely with respect to the direction of connection (26) of the gripper rail coupling (14) can be converted into movement of the tie rod (18).

2. Press according to claim 1, **characterised In that** a movement of the gripper rail (3) with its gripper rail coupling (14) relative to a support bracket (31) or a tool bench (5) transversely with respect to the length of the gripper rall (3) is provided for actuating the first actuating element (19) and **In that** the first actuating element (19) can be acted upon by this movement of the gripper rail (3).

3. Press according to claim 1 or 2, **characterised in that** the tie rod (18) is held in the holding position by a restoring force or spring (34) and **in that** the tie rod (18) can be retracted into the release position by the first actuating element (19) counter to the restoring force or the force of the spring (34) in order to release the gripper rail coupling (14) relative to the coupling member (15).

4. Press according to one of claims 1 to 3, **characterised in that** on the support bracket (31) or the tool bench (5) is formed a guide element (32, 36) which movably guides the mating coupling member (16) with the gripper rail (3) along or parallel to the direction of actuation of the first actuating element (19) in a receiving region and in this receiving region secures it against displacement in the direction of connection (26) of the gripper rail coupling (14), and **in that** the guide element (36) is embodied in particular as a pin that engages in a correspondingly shaped recess (37) in the gripper rail (3) or mating coupling member (16).

5. Press according to one of claims 1 to 4, **characterised in that** the support bracket (31) or the tool bench (5) has a release projection (32), **in that** the release projection (32) is brought into operative connection with the first actuating element (19) by the lowering of the gripper rail (3) with its gripper rail coupling (14) and **in that** the tie rod (18) can be moved into its release position by continuation of the lowering movement via the first actuating element (19), so as to release the gripper rail coupling (14).

6. Press according to one of claims 1 to 5, **characterised in that**, as the first actuating element, a toothed wheel (28) or toothed segment is provided, having a pivot arm (27) which can be pivoted by the release projection (32), as a result of which the toothed wheel (28) or toothed segment can be rotated, and **in that** the tie rod (18) or a part connected thereto has a toothed rack (30) which meshes with the toothed wheel (28) or toothed segment, so that the tie rod (18) can be retracted by the pivoting of the pivot arm (27).

7. Press according to one of claims 1 to 6, **characterised in that**, as the first actuating element (19) or as an additional actuating element, a tool engagement point is provided on the toothed wheel (28), for example a polygon or a hollow polygon and a tool that fits it.

8. Press according to one of claims 1 to 7, **characterised in that** after the toothed rack (18) has been withdrawn the locking element or elements (21) is or are released and as a result the coupling member (15) can be retracted relative to the mating coupling member (16) in the direction of connection (26) of the gripper rail coupling (14) into an uncoupled position.

9. Press according to one of claims 1 to 8, **characterised in that** for fixing the tie rod (18) in the release position counter to the restoring force or spring (34) acting thereon, a latching mechanism (38) with a lock (39) is provided which is disengaged in the holding position of the tie rod (18) and engaged in the uncoupled position of the gripper rail coupling (14), **in that** the lock (39) can be mechanically actuated in particular by a second actuating element (42) and **in that** the second actuating element (42) converts an actuation acting from outside and directed substantially parallel to the direction of connection (26) of the gripper rail coupling (14) into actuation of the lock (39).

10. Press according to one of claims 1 to 9, **characterised in that** the second actuating element (42) has a pivotably mounted lever arm (42), **in that** the lock (39) is movable transversely with respect to the tie rod (18) by the pivoting movement of the lever arm (42), and **in that** the tie rod (18) has a recess (40) which is arranged in the region of the lock (39) after the withdrawal of the tie rod (18), so that the lock (39) engages in the recess (40) and moves into the locking position through spring force (46) as a result of the pivoting of the lever arm (42).

11. Press according to one of claims 1 to 10, **characterised in that** for releasing the lock (39) on the gripper rail (3) or the mating coupling member (16) connected thereto, a second release projection (43) is provided which engages under the lever arm (42) carrying the lock (39) as the gripper rail coupling (14) is closed and thereby causes the lock (39) to disengage, and **in that** the lever arm (42) that actuates the lock (39) acts on the lock (39) in particular on one side of its pivot bearing (41) and cooperates with the second release projection (43).

12. Press according to one of claims 1 to 11, **characterised in that** a compression spring (46) acts on the lever arm (42) actuating the look (39), on the other side of its pivot bearing (41), said compression spring (46) moving the lever arm (42) and the lock (39) into the position of use after the withdrawal of the coupling member (15) out of its coupling position and away from the second release projection (43).

13. Press according to one of claims 1 to 12, **characterised in that** the coupling member (15) comprises, on its underside (47), a recess (48), **in that** the first actuating element (19) partly protrudes from this recess (48), **in that** this recess (48) is open in the direction of connection (26) of the gripper rail coupling (14).

14. Press according to one of claims 1 to 13, **characterised in that** the at least one locking element (21) is embodied as a sphere and **in that** the recess (22) in the mating coupling member (16) that accommodates the locking element (21) is a spherical sleeve (23).

15. Press according to one of claims 1 to 14, **characterised in that** the coupling member (15) has a conical portion (25) and the mating coupling member (16) has a correspondingly conical receiving region and **in that** the coupling lock (17) is arranged concentrically with respect to the cone-like portion (25) of the coupling member (15).

## Revendications

1. Presse de production ou de formage de pièces à usiner parvenant à leur forme définitive en plusieurs étapes, comprenant un dispositif de transfert (2) dévolu à l'avance pas à pas desdites pièces vers des postes individuels de mise en forme de ladite presse, ce dispositif de transfert (2) comportant au moins une, ou deux barre(s) de préhension (3) qui peu(ven)t être animée(s) de va-et-vient dans la direction de coulissement dédiée aux mouvements d'avance et de recul, offre(nt) des parties de préhension ou des zones de préhension (7) conçues pour saisir lesdites pièces à usiner, et peu(ven)t être réglée(s) en vue de la saisie desdites pièces et du mouvement dans la direction d'avance, puis du retour consécutif à la position initiale, ledit dispositif de transfert (2) étant muni d'au moins un accouplement (14) des barres de préhension, présentant un organe d'accouplement (15) et un organe complémentaire d'accouplement (16) relié rigidement à la barre de préhension (3), et dont la réalisation est adaptée à celle dudit organe d'accouplement (15), lequel organe d'accouplement (15) peut être dissocié d'avec ledit organe complémentaire d'accouplement (16) et être relié à ce dernier, en vue du remplacement de l'outillage, et ledit organe d'accouplement (15) étant équipé d'un mécanisme d'arrêt (17), **caractérisée par le fait que** le mécanisme d'arrêt (17) comporte une tige de traction (18) qui est orientée, pour l'essentiel, parallèlement à la direction de liaison (26) de l'accouplement (14) des barres de préhension, et à laquelle des coulissements peuvent être imprimés, par un premier élément d'actionnement (19), entre un emplacement de retenue et un emplacement de libération ; **par le fait que** ladite tige de traction (18), occupant ledit emplacement de retenue, pousse au moins un élément d'arrêt (21) transversalement par rapport à ladite direction de liaison (26) de l'accouplement (14) des barres de préhension, et radialement vers l'extérieur, jusque dans un évidement (22) de l'organe complémentaire d'accouplement (16) ; **par le fait que** ledit premier élément d'actionnement (19) peut être manoeuvré mécaniquement depuis l'extérieur ; et **par le fait qu'**une manoeuvre dirigée transversalement par rapport à ladite direction de liaison (26) dudit l'accouplement (14) des barres de préhension peut être convertie, par l'intermédiaire dudit premier élément d'actionnement (19), en un coulissement de ladite tige de traction (18).

2. Presse selon la revendication 1, **caractérisée par le fait qu'**un mouvement de la barre de préhension (3) conjointement à son accouplement (14), s'opérant vis-à-vis d'une console d'appui (31) ou d'un plateau porte-outils (5) et transversalement par rapport à l'étendue de ladite barre de préhension (3), est prévu pour la manoeuvre du premier élément d'actionnement (19) ; et **par le fait que** ledit premier élément d'actionnement (19) peut être sollicité par ce mouvement de ladite barre de préhension (3).

3. Presse selon la revendication 1 ou 2, **caractérisée par le fait que** la tige de traction (18) est maintenue à l'emplacement de retenue sous l'effet d'une force de rappel, ou d'un ressort (34) ; et **par le fait que** ladite tige de traction (18) peut être rétractée à l'emplacement de libération vis-à-vis de l'organe d'accouplement (15) par l'intermédiaire du premier élément d'actionnement (19), en opposition à ladite force de rappel ou à la force dudit ressort (34), en vue de neutraliser l'accouplement (14) des barres de préhension.

4. Presse selon l'une des revendications 1 à 3, **caractérisée par le fait qu'**un élément de guidage (32, 36), ménagé sur la console d'appui (31) ou sur le plateau porte-outils (5), guide l'organe complémentaire d'accouplement (16) conjointement à la barre de préhension (3) dans une zone de réception, avec faculté de coulissement le long de la direction de manoeuvre du premier élément d'actionnement (19) ou parallèlement à ladite direction, et interdit, dans cette zone de réception, un coulissement le long de la direction de liaison (26) de l'accouplement (14) des barres de préhension ; et **par le fait que** ledit élément de guidage (36) est réalisé, en particulier, sous la forme d'un tenon pénétrant dans un évidement (37) de réalisation correspondante, dans ladite barre de préhension (3) ou dans ledit organe complémentaire d'accouplement (16).

5. Presse selon l'une des revendications 1 à 4, **caractérisée par le fait que** la console d'appui (31) ou le plateau porte-outils (5) présente une saillie de déclenchement (32) ; **par le fait que** ladite saillie de déclenchement (32) vient en liaison opérante avec le premier élément d'actionnement (19) suite à un abaissement de la barre de préhension (3), conjointement à son accouplement (14) ; et **par le fait que** la tige de traction (18) peut être transférée à son emplacement de libération, dans le sens d'une neutralisation dudit accouplement (14) des barres de préhension, du fait de la poursuite du mouvement d'abaissement par l'intermédiaire dudit premier élément d'actionnement (19).

6. Presse selon l'une des revendications 1 à 5, **caractérisée par le fait qu'**une roue dentée (28) ou un segment denté, muni(e) d'un bras pivotant (27), est prévu(e) en tant que premier élément d'actionnement (19), ledit bras pivotant (27) pouvant être animé, sous l'action de la saillie de déclenchement (32), d'un pivotement par lequel une rotation peut être imprimée à ladite roue dentée (28) ou audit segment denté ; et **par le fait que** la tige de traction (18), ou une partie reliée à cette dernière, est pourvue d'une crémaillère (30) engrenant dans ladite roue dentée (28) ou dans ledit segment denté, de sorte que ladite tige de traction (18) peut être rétractée sous l'action de la denture, suite au pivotement dudit bras pivotant (27).

7. Presse selon l'une des revendications 1 à 6, **caractérisée par le fait qu'**une partie d'engagement d'outil située sur la roue dentée (28), par exemple une configuration à six pans ou à six pans creux, ainsi qu'un outil adapté en conséquence, sont prévus en tant que premier élément d'actionnement (19) ou en tant qu'élément supplémentaire d'actionnement.

8. Presse selon l'une des revendications 1 à 7, **caractérisée par le fait que** l'élément ou les éléments d'arrêt (21) est (sont) libéré(s) à l'issue de la rétraction de la tige de traction (18), de sorte que l'organe d'accouplement (15) peut être rétracté vers un emplacement désaccouplé, vis-à-vis de l'organe complémentaire d'accouplement (16), le long de la direction de liaison (26) de l'accouplement (14) des barres de préhension.

9. Presse selon l'une des revendications 1 à 8, **caractérisée par le fait qu'**un mécanisme encliquetable (38) prévu pour la consignation à demeure de la tige de traction (18) à l'emplacement de libération, en opposition à la force de rappel ou au ressort (34) agissant sur ladite tige, comporte un verrou (39) qui n'est pas en prise à l'emplacement de retenue de ladite tige de traction (18) et provoque un blocage à un emplacement désaccouplé de l'accouplement (14) des barres de préhension ; **par le fait que** ledit verrou (39) peut, en particulier, être manoeuvré mécaniquement par l'intermédiaire d'un second élément d'actionnement (42) ; et **par le fait que** ledit second élément d'actionnement (42) convertit une manoeuvre, agissant de l'extérieur et orientée pour l'essentiel parallèlement à la direction de liaison (26) dudit accouplement (14) des barres de préhension, en une manoeuvre dudit verrou (39).

10. Presse selon l'une des revendications 1 à 9, **caractérisée par le fait que** le second élément d'actionnement (42) offre un bras de levier (42) monté à pivotement ; **par le fait que** le verrou (39) peut être déplacé transversalement par rapport à la tige de traction (18), suite au mouvement pivotant dudit bras de levier (42) ; et **par le fait que** la tige de traction (18) est dotée d'une dépouille (40) qui est située dans la région dudit verrou (39) après rétraction de ladite tige de traction (18), de sorte que ledit verrou (39) pénètre dans ladite dépouille (40) sous l'action d'une force élastique (46) suite au pivotement dudit bras de levier (42), et parvient en position de blocage.

11. Presse selon l'une des revendications 1 à 10, **caractérisée par le fait qu'**une seconde saillie de déclenchement (43) située sur la barre de préhension (3) ou sur l'organe complémentaire d'accouplement (16) relié à cette dernière, en vue de la libération du verrou (39), emprisonne par-dessous le bras de levier (42) portant ledit verrou (39), lors de la fermeture de l'accouplement (14) des barres de préhension, fait pivoter ledit bras, et supprime ainsi la prise dudit verrou (39) ; et **par le fait que** ledit bras de levier (42), actionnant le verrou (39), sollicite notamment ledit verrou (39) sur l'un des côtés de son système (41) de montage pivotant, et coopère avec ladite seconde saillie de déclenchement (43).

12. Presse selon l'une des revendications 1 à 11, **caractérisée par le fait qu'**un ressort de pression (46) en prise avec le bras de levier (42) actionnant le verrou (39), sur l'autre côté de son système (41) de montage pivotant, amène ledit bras de levier (42) et ledit verrou (39) en position d'utilisation après que l'organe d'accouplement (15) a été rétracté de son emplacement d'accouplement, et éloigné de la seconde saillie de déclenchement (43).

13. Presse selon l'une des revendications 1 à 12, **caractérisée par le fait que** l'organe d'accouplement (15) comporte un évidement (48) à sa face inférieure (47) ; **par le fait que** le premier élément d'actionnement (19) fait partiellement saillie au-delà de cet évidement (48) ; et **par le fait que** cet évidement (48) est ouvert dans la direction de liaison (26) de l'accouplement (14) des barres de préhension.

14. Presse selon l'une des revendications 1 à 13, **caractérisée par le fait que** l'élément d'arrêt (21), à présence minimale, est réalisé sous la forme d'une bille ; et **par le fait que** l'évidement (22) de l'organe complémentaire d'accouplement (16), qui reçoit ledit élément d'arrêt (21), se présente comme une douille sphérique (23).

15. Presse selon l'une des revendications 1 à 14, **caractérisée par le fait que** l'organe d'accouplement (15) présente une région tronconique (25), l'organe complémentaire d'accouplement (16) présentant une zone réceptrice de conicité correspondante ; et **par le fait que** le système (17) d'arrêt de l'accouplement est disposé concentriquement à ladite région (25), de type tronconique, dudit organe d'accouplement (15).
